# EUROPÄISCHE PATENTSCHRIFT

(11) **EP 2 663 754 B1**
(45) Veröffentlichungstag und Bekanntmachung des Hinweises auf die Patenterteilung: **01.04.2015**
(21) Anmeldenummer: 12700108.9
(22) Anmeldetag: 09.01.2012
(51) Int. Cl.: F02B 37/18

(54) **ABGASTURBOLADER MIT EINEM VERDICHTERGEHÄUSE MIT INTEGRIERTEM WASTEGATE-STELLER**
EXHAUST GAS TURBOCHARGER HAVING A COMPRESSOR HOUSING HAVING AN INTEGRATED WASTEGATE ACTUATOR
TURBOCOMPRESSEUR À GAZ D'ÉCHAPPEMENT POURVU D'UN CARTER DE COMPRESSION À ACTIONNEUR DE SOUPAPE DE DÉRIVATION INTÉGRÉ

(30) Priorität: 13.01.2011 DE 102011002627
(43) Veröffentlichungstag der Anmeldung: 20.11.2013
(73) Patentinhaber: Continental Automotive GmbH, 30165 Hannover (DE)
(72) Erfinder: KOCH, Achim, 93105 Tegernheim (DE); UHLIG, Christian, 67551 Worms (DE); HERFURTH, Roland, 93051 Regensburg (DE); SPARRER, Christoph, 93053 Regensburg (DE); LASAR, Martin, 65812 Bad Soden (DE); KREMINA, Vinzent, 80433 Frankfurt (DE); EID, Thorsten, 65552 Limburg-Eschhofen (DE)
(86) Internationale Anmeldenummer: PCT/EP2012/050226
(87) Internationale Veröffentlichungsnummer: WO 2012/095383

(56) Entgegenhaltungen:
- EP-A2- 1 752 635
- EP-A2- 1 881 162
- WO-A2-2010/009945
- DE-A1-102007 017 825
- DE-A1-102007 055 630
- DE-A1-102008 014 609
- GB-A- 2 033 007
- JP-A- 63 205 419
- US-A1- 2007 199 318

## Beschreibung

Die Erfindung betrifft einen Abgasturbolader, der mit einem sogenannten Wastegate ausgestattet ist.

Abgasturbolader dienen dazu, den Wirkungsgrad eines Verbrennungsmotors zu verbessern und damit dessen Leistung zu steigern. Der Abgasturbolader weist hierzu eine Turbine mit einem Turbinenrad und einen Verdichter mit einem Verdichterrad auf, wobei die beiden Laufräder auf einer gemeinsamen Welle angeordnet sind. Das Turbinenrad wird hierbei über einen Abgasmassenstrom einer angeschlossenen Brennkraftmaschine angetrieben und treibt wiederum das Verdichterrad an. Der Verdichter verdichtet angesaugte Frischluft und führt diese der Brennkraftmaschine zu. Die gemeinsame Welle ist in einem Lagergehäuse des Turboladers gelagert. Des Weiteren ist das Turbinenrad der Turbine in einem Turbinengehäuse angeordnet und das Verdichterrad des Verdichters in einem Verdichtergehäuse.

Ein solcher Abgasturbolader hat im Betrieb an der Brennkraftmaschine bzw. einem angeschlossenen Motor verschiedenste Anforderungen zu erfüllen. Eine dieser Anforderungen besteht darin, die hohen Temperaturen aufzunehmen, die beispielsweise aufgrund des heißen Abgasmassenstroms in dem Turboladergehäuse entstehen können.

Die übliche Konstruktion eines Abgasturboladers sieht dabei einzelne Gehäuse vor, die jeweils aus einem an die dort herrschende Temperatur angepassten Werkstoff bestehen. Dabei ist das Verdichtergehäuse üblicherweise aus Aluminium, während das Lagergehäuse aus Grauguss ist, wobei das Lagergehäuse zusätzlich auch wassergekühlt ausgeführt sein kann. Das Turbinengehäuse besteht im Allgemeinen aufgrund der hohen Temperaturen, die in diesem Bereich herrschen, aus Werkstoffen mit einem hohen Nickelanteil. Aufgrund der angepassten, unterschiedlichen Werkstoffe für die einzelnen Gehäuse sind diese Gehäuse als separate Teile ausgebildet, die miteinander verbunden sind und dabei außerdem gegeneinander abgedichtet sein müssen.

Je mehr die Motordrehzahl steigt, desto schneller dreht sich durch die antreibende Abgasmenge das Turbinenrad der Turbine und mit diesem auch die Welle des Abgasturboladers, auf welcher sich weiterhin das Verdichterrad des Verdichters befindet. Durch die schnellere Drehung der Welle und damit auch des Verdichterrades erhöht sich die Luftfördermenge des Verdichters. Dies führt zu einer wachsenden Abgasmenge des Motors und damit wiederum zu einem schnelleren Antreiben des Turbinenrades. Um die jeweils gegebenen mechanischen und thermischen Grenzen des Motors nicht zu überschreiten, ist eine Regelung des Abgasturboladers notwendig.

Eine derartige Regelung eines Abgasturboladers kann unter Verwendung eines Wastegates erfolgen, das auch als Bypassventil bezeichnet wird. Ein derartiges Wastegate weist eine mit dem Turbinengehäuse des Abgasturboladers verbundene Klappe auf, die bei Bedarf geöffnet werden kann, um in Abhängigkeit von der Öffnungsstellung der Klappe einen mehr oder weniger großen Teil des heißen Abgases an der Turbine vorbei direkt in den Auspuff des Fahrzeugs zu leiten. Dadurch wird ein weiteres Ansteigen der Turbinendrehzahl unterbunden.

Ein derartiges Wastegate unterliegt aufgrund seiner Position im heißen Abgasstrom einer hohen thermischen und mechanischen Belastung.

Es ist bereits bekannt, Wastegate-Klappen unter Verwendung eines pneumatischen Aktuators zu verstellen. Derartige pneumatische Aktuatoren werden oftmals auch als Druckdosen bezeichnet.

Bei neueren Anwendungen gibt es nun vermehrt Bestrebungen, die genannten pneumatischen Aktuatoren durch elektrische Aktuatoren zu ersetzen. Ein derartiger elektrischer Wastegate-Steller bietet im Vergleich zu einem pneumatischen Wastegate-Steller Vorteile. Dazu gehören eine hohe Stellgeschwindigkeit, eine gute Stellgenauigkeit und große Stellkräfte. Aufgrund dieser großen Stellkräfte wird ein festes Schließen der Wastegate-Klappe im zugehörigen Klappensitz gewährleistet. Ein elektrischer Wastegate-Steller weist aber auch Nachteile auf. Dazu gehören ein erhöhtes Gewicht, ein vergrößerter Bauraumbedarf und eine Eigenerwärmung. Insbesondere die thermische Auslegung eines elektrischen Wastegate-Stellers bereitet in der Praxis Probleme. Im Motorraum eines Kraftfahrzeugs herrschen Temperaturen von bis zu 140° C. Im unmittelbaren Umfeld eines Abgasturboladers können noch weit höhere Temperaturen auftreten. Im Betrieb eines elektrischen Wastegate-Stellers wird dieser durch den hindurchfließenden Strom zusätzlich erwärmt. Bei ungünstigen Umgebungsbedingungen, insbesondere bei hohen Temperaturen und einer geringen Anströmung, kann die Leistungsfähigkeit des Stellgliedes reduziert sein. Es kann sogar zu einem Ausfall des Wastegate-Systems kommen. Eine weitere Herausforderung bei einer Verwendung eines elektrischen Wastegate-Stellers sind die gesteigerten Anforderungen an die Verbindung zwischen dem Wastegate-Steller und der Wastegate-Klappe aufgrund der größeren Stellkräfte. Ist diese Verbindung nicht hinreichend stabil ausgeführt, dann kann es zu einer unerwünschten Verformung von kraftübertragenden Bauteilen kommen. Auch aufgrund dieser unerwünschten Verformung von kraftübertragenden Bauteilen kann es zu einem Ausfall des Wastegate-Systems kommen.

Ein weiteres in der Praxis auftretendes Problem ist die Positionierung des jeweiligen Wastegate-Stellers. In der Regel bildet das Wastegate einen Teil des Turbinengehäuses. Der Wastegate-Steller bzw. Aktuator ist hingegen in der Regel am Verdichtergehäuse oder an einem Halter am Verdichtergehäuse befestigt. Bei diesem Halter handelt es sich entweder um ein separates Bauteil, das beispielsweise mittels Schrauben am Verdichtergehäuse befestigt ist, oder um ein Bauteil, das bereits beim Gießprozess zusammen mit dem Verdichtergehäuse hergestellt wird. Hintergrund dieser Integration des Wastegate-Stellers in das Verdichtergehäuse sind vornehmlich Kostenvorteile und Packaging-Vorteile.

Zwischen dem Turbinengehäuse und dem Verdichtergehäuse ist das Lagergehäuse angeordnet. Folglich sind bei bekannten Abgasturboladern der Wastegate-Steller und das Wastegate selbst durch eine vergleichsweise lange Toleranzkette miteinander verbunden.

Ein elektrischer Wastegate-Steller muss in Bezug auf seine Auslegung entsprechend stark gewählt werden, so dass er auch dann die geforderten Stellkräfte aufbringen kann, wenn er selbst sehr heiß ist, und dass er die auftretenden Lastzyklen bewältigen kann, ohne sich zu überhitzen. Des Weiteren müssen beim Zusammenbau in einem letzten Montageschritt durch eine geeignete Ausgleichsvorrichtung im Koppelelement bzw. durch einen geeigneten Montageprozess des Koppelelementes die aufsummierten Toleranzen ausgeglichen werden. Dies ist mit einem erheblichen Aufwand und damit auch mit erheblichen Kosten verbunden.

Aus der DE 10 2007 017 825 A1 ist bereits ein Verdichtergehäuse für einen Verdichter eines Turboladers bekannt, welches einen Aufnahmebereich zum Aufnehmen zumindest von Teilen eines Aktors aufweist. Dieser Aufnahmebereich kann an einem Deckel des Verdichtergehäuses oder innerhalb des Verdichtergehäuses vorgesehen sein.

Aus der EP 1 881 162 A2 ist ein Abgasturbolader für eine Brennkraftmaschine mit einer eine veränderbare Turbinengeometrie aufweisenden Abgasturbine und einem elektrischen Stellantrieb zum Verändern der Turbinengeometrie bekannt. Der Abgasturbolader umfasst des Weiteren einen Verdichter, der ein Verdichtergehäuse aufweist. Der zum Verändern der Turbinengeometrie vorgesehene Stellantrieb weist einen abnehmbaren Gehäusedeckel und ein Gehäuse auf, welches einen integralen Bestandteil des Verdichtergehäuses bildet.

Aus der WO 2010/009945 A2 ist ein gekühltes Turboladergehäuse bekannt, welches eine oder mehrere Elektronikeinrichtungen aufweist. Bei einer dieser Elektronikeinrichtungen kann es sich um eine Wastegate-Betätigungseinrichtung handeln. Die Kühlung erfolgt unter Verwendung eines Kühlmediums, bei dem es sich um Wasser oder Öl handelt. Das Kühlmedium wird derart geleitet, dass es im Bereich der jeweiligen Elektronikeinrichtung vorbeiströmt.

Aus der JP 63205419 A ist es bekannt, im Verdichtergehäuse eines Abgasturboladers ein elektromagnetisches Ventil zu installieren, um bei Bedarf einem unzulässige Druckanstieg im Verdichtergehäuse entgegenzuwirken.

Aus der DE 10 2008 014 609 A1 ist ein Aktuator zum Betätigen eines Schaltelementes einer Verbrennungskraftmaschine mit einem elektromotorischen Stellantrieb bekannt, der über ein Getriebe auf das Schaltelement wirkt, bei dem es sich um Wastegateventil auf der Abgasseite eines Abgasturboladers handeln kann. Der Stellantrieb ist auf der Frischluftseite des Abgasturboladers angeordnet und über das Getriebe mit dem Wastegate-Ventil auf der Abgasseite verbunden.

Bei allen bekannten Vorschlägen zur Positionierung eines elektrischen Wastegate-Stellers in einem Abgasturbolader besteht das Problem, dass es zu einer Überhitzung des Gleichstrommotors des elektrischen Wastegate-Stellers kommen kann.

Die Aufgabe der Erfindung besteht darin, einen mit einem elektrischen Wastegate-Steller ausgestatteten Abgasturbolader anzugeben, bei dem die Wahrscheinlichkeit einer Überhitzung des Gleichstrommotors des elektrischen Wastegate-Stellers reduziert ist.

Diese Aufgabe wird durch einen Abgasturbolader mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass der elektrische Wastegate-Steller des Abgasturboladers derart in das Verdichtergehäuse integriert ist, dass einerseits der Wärmeabfluss vom Gleichspannungsmotor des Wastegate-Stellers an die Umgebung verbessert ist und dass des Weiteren eine platzsparende Anordnung der Komponenten des Wastegate-Stellers im Verdichtergehäuse gewährleistet ist.

Des Weiteren sind bei einem erfindungsgemäßen Abgasturbolader alle kraftführenden Bauteile des Wastegate-Stellers, insbesondere der Gleichspannungsmotor, das Getriebe und die Abtriebswelle, direkt mit dem Verdichtergehäuse verbunden. Dies reduziert die Wahrscheinlichkeit einer hitzebedingten Schädigung dieser Bauteile bzw. eines hitzebedingten Ausfalls des Wastegate-Systems weiter.

Diese Vorteile werden im Wesentlichen dadurch erreicht, dass der elektrische Wastegate-Steller derart in das Verdichtergehäuse integriert ist, dass eine starke thermische Kopplung zwischen dem Gleichstrommotor und dem Frischlufteinlasskanal des Verdichtergehäuses vorliegt. Dadurch wird eine verbesserte Wärmeabfuhr erreicht, da dieser Bereich des Verdichtergehäuses im Betrieb ständig von kalter Frischluft durchströmt wird. Dies reduziert die Anforderungen an die Bauteile des elektrischen Wastegate-Stellers, wodurch das gesamte Wastegate-System kleiner und entsprechend kostengünstiger dimensioniert werden kann.

Weitere Vorteile im Hinblick auf Packaging und den Kräftefluss werden durch eine optimierte Platzierung und eine verbesserte Dimensionierung der weiteren Bauteile des elektrischen Wastegate-Stellers im Verdichtergehäuse erreicht. Nachfolgend wird ein Abgasturbolader gemäß der vorliegenden Erfindung anhand der Zeichnungen beispielhaft erläutert. Es zeigt
- Figur 1: eine perspektivische Skizze eines Abgasturboladers mit in das Verdichtergehäuse integriertem elektrischen Wastegate-Steller,
- Figur 2: eine perspektivische Skizze des Verdichtergehäuses mit integriertem elektrischen Wastegate-Steller als Baugruppe und
- Figur 3: eine Querschnittsdarstellung des Verdichtergehäuses mit integriertem elektrischen Wastegate-Steller.

Ein Abgasturbolader gemäß der Erfindung enthält ein einen Frischlufteinlasskanal aufweisendes Verdichtergehäuse und einen in das Verdichtergehäuse integrierten elektrischen Wastegate-Steller, wobei der elektrische Wastegate-Steller mit dem Frischlufteinlasskanal thermisch gekoppelt ist.

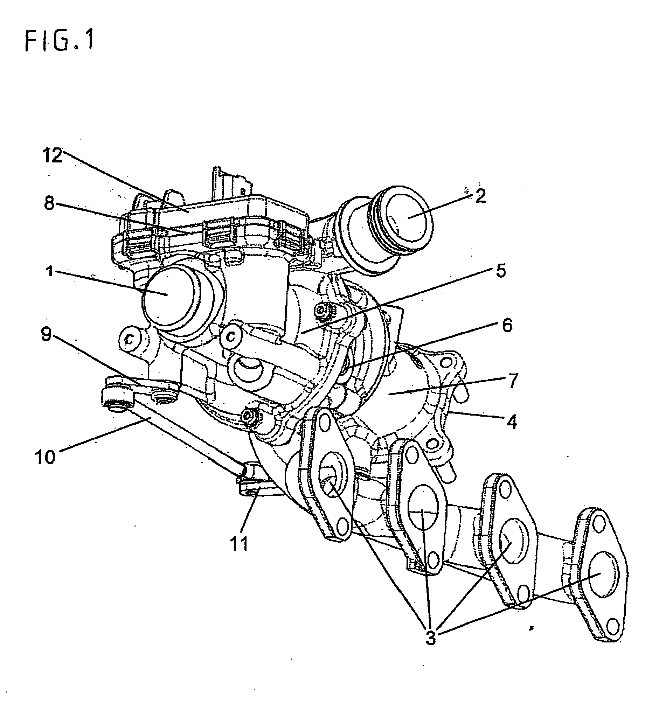

Die Figur 1 zeigt eine perspektivische Skizze zur Veranschaulichung eines derartigen Abgasturboladers, wobei in dieser Darstellung eine Außenansicht des Abgasturboladers gezeigt ist.

Der dargestellte Abgasturbolader weist ein Verdichtergehäuse 5, ein Lagergehäuse 6 und ein Turbinengehäuse 7 auf.

Im Verdichtergehäuse 5 ist in üblicher Weise ein auf einer gemeinsamen Welle angeordnetes Verdichterrad vorgesehen. Im Turbinengehäuse 7 ist in üblicher Weise auf der gemeinsamen Welle ein Turbinenrad angeordnet. Die gemeinsame Welle ist im Lagergehäuse 6, welches zwischen dem Verdichtergehäuse 5 und dem Turbinengehäuse 7 positioniert ist, gelagert. Im Betrieb des Abgasturboladers wird das Turbinenrad über einen Abgasmassenstrom einer angeschlossenen Brennkraftmaschine angetrieben und treibt seinerseits über die gemeinsame Welle das Verdichterrad an. Der Verdichter verdichtet angesaugte Frischluft und führt diese der Brennkraftmaschine zu.

Das Verdichtergehäuse 5 weist einen Fischlufteinlasskanal 1, durch welchen Frischluft aus der Umgebung in den Abgasturbolader eingesaugt wird, und einen Frischluftaustrittskanal 2 auf, durch welchen verdichtete Frischluft zur Weiterleitung an die Brennkraftmaschine ausgegeben wird.

Des Weiteren weist das Verdichtergehäuse 5 einen integrierten Wastegate-Steller 8 auf. Dieser Wastegate-Steller 8 wirkt über einen Abtriebshebel 9 und eine Koppelstange 10 auf einen Wastegate-Hebel 11 ein, welcher eine im Turbinengehäuse 7 angeordnete Wastegate-Klappe je nach momentanem Bedarf mehr oder weniger weit öffnet oder schließt. Um eine einfache Montage der Bauteile des elektrischen Wastegate-Stellers 8 im Verdichtergehäuse 5 zu ermöglichen, ist das Verdichtergehäuse nach oben hin offen ausgebildet und wird nach der genannten Montage mittels eines Kunststoffdeckels 12 verschlossen.

Das Lagergehäuse 6 weist einen nicht dargestellten Öleintritt und einen ebenfalls nicht dargestellten Ölaustritt auf. Durch den Öleintritt tritt im Betrieb des Abgasturboladers Öl ein, das zur Schmierung der gemeinsamen Welle verwendet wird.

Das Turbinengehäuse 7 weist Abgaseintrittskanäle 3 und einen Abgasaustrittskanal 4 auf. Die Abgaseintrittskanäle 3 sind mit Abgasausgängen der Brennkraftmaschine verbunden, so dass durch die Abgaseintrittskanäle 3 das heiße Abgas der Brennkraftmaschine in den Innenbereich des Turbinengehäuses 7 gelangt. Dort treibt das heiße Abgas das im Turbinengehäuse angeordnete Turbinenrad an, welches wiederum über die gemeinsame Welle das im Verdichtergehäuse angeordnete Verdichterrad antreibt. Durch den Abgasaustrittskanal 4, der mit dem Katalysator des Kraftfahrzeugs verbunden ist, tritt das Abgas wieder aus dem Turbinengehäuse 7 aus. Zur Regelung der Leistung des Turbinenrades ist in das Turbinengehäuse ein Wastegate integriert. Dieses weist eine Wastegate-Klappe auf, die mittels des in das Verdichtergehäuse integrierten elektrischen Wastegate-Stellers je nach momentanem Bedarf mehr oder weniger weit geöffnet werden kann, um einen gewünschten Teil des heißen Abgases unter Umgehung des Turbinenrades direkt dem Abgasaustrittskanal zuzuleiten.

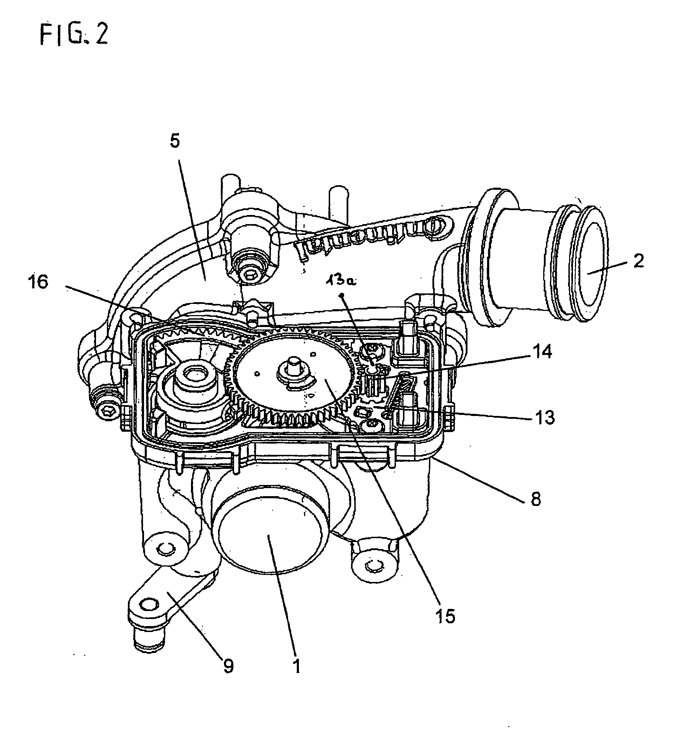

Die Figur 2 zeigt eine perspektivische Skizze des Verdichtergehäuses 5 mit integriertem elektrischen Wastegate-Steller 8 als Baugruppe, wobei in dieser Skizze der Kunststoffdeckel 12 abgenommen ist.

Aus der Figur 2 ist ersichtlich, dass der elektrische Wastegate-Steller 8 einen Gleichstrommotor 13 aufweist, der mit einer Motorabtriebswelle 13a versehen ist. Mit dieser Motorabtriebswelle 13a ist ein Abtriebszahnrad 14 des Gleichstrommotors verbunden.

Dieses Abtriebszahnrad 14 des Gleichstrommotors 13 wirkt über ein Zwischenzahnrad 15 auf ein Antriebszahnrad 16 ein, das mit einer Abtriebswelle 18 des elektrischen Wastegate-Stellers verbunden ist. Die Abtriebswelle 18 des elektrischen Wastegate-Stellers wirkt auf den Abtriebshebel 9 ein, der über die in der Figur 1 gezeigte Koppelstange 10 und den Wastegate-Hebel 11 bei Bedarf die Wastegate-Klappe verstellt. Des Weiteren sind in der Figur 2 der Frischlufteinlasskanal 1 und der Frischluftaustrittskanal 2 veranschaulicht.

Bei der in der Figur 2 gezeigten Vorrichtung wird das Drehmoment des Abtriebszahnrades 14 des Gleichstrommotors 13 an das Zwischenzahnrad 15 übertragen. Dieses wiederum gibt die Drehbewegung weiter an das Antriebszahnrad 16 der Abtriebswelle 18 des elektrischen Wastegate-Stellers. Die Abtriebswelle 18 wirkt schließlich über den Abtriebshebel 9, die Koppelstange 10 und den Wastegate-Hebel 11 auf die im Turbinengehäuse 7 angeordnete Wastegate-Klappe ein.

Alternativ zu dem anhand der Figur 2 beschriebenen zweistufigen Getriebe kann auch ein in das Verdichtergehäuse integrierter elektrischer Wastegate-Steller eine, drei, vier oder noch mehr Getriebestufen aufweisen.

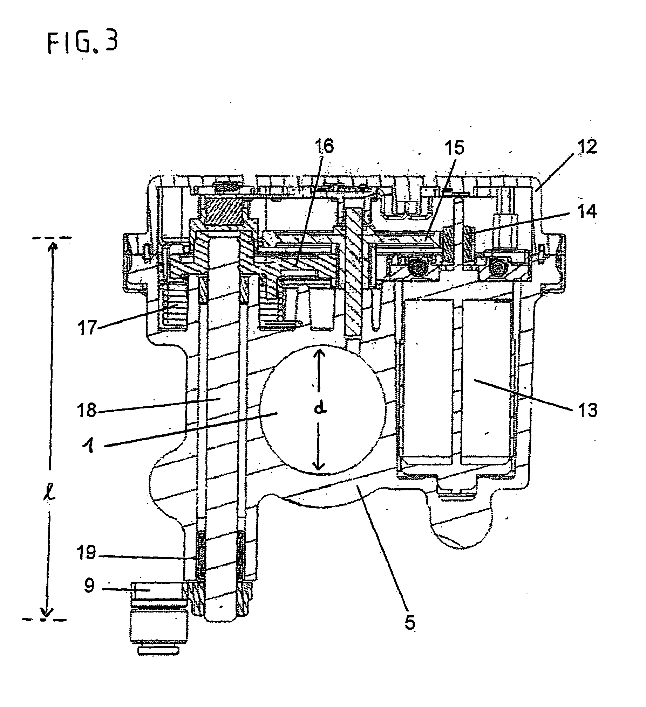

Die Figur 3 zeigt eine Querschnittsdarstellung des Verdichtergehäuses 5 mit integriertem elektrischen Wastegate-Steller. In der Mitte dieser Darstellung ist der Frischlufteinlasskanal 1 gezeigt, durch den die angesaugte Frischluft zum Verdichterrad strömt. In der Figur 3 rechts neben dem Frischlufteinlasskanal 1 ist der Gleichstrommotor 13 des elektrischen Wastegate-Stellers positioniert. Auf der dem Gleichstrommotor 13 gegenüberliegenden Seite des Frischlufteinlasskanals 1 ist die Abtriebswelle 18 des elektrischen Wastegate-Stellers positioniert.

Aus der Figur 3 ist des Weiteren ersichtlich, dass der Gleichstrommotor 13 eine Abtriebswelle 13a aufweist, auf welcher das Abtriebszahnrad 14 des Gleichstrommotors 13 befestigt ist. Dieses Abtriebszahnrad 14 wirkt über das Zwischenzahnrad 15 auf das Antriebszahnrad 16 ein, welches auf der Abtriebswelle 18 des elektrischen Wastegate-Stellers befestigt ist. Die Abtriebswelle 18 des elektrischen Wastegate-Stellers ist in einem Wälzlager 19 drehbar gelagert und betätigt den Abtriebshebel 9. Eine Torsionsfeder 17 unterstützt die Drehbewegung im Falle eines Schließens der Wastegate-Klappe.

Die Anordnung der Bauteile des elektrischen Wastegate-Stellers ist derart, dass alle Teile, die an der Kräfte- bzw. Momentenübertragung beteiligt sind, direkt im Verdichtergehäuse 5 gelagert sind. Um dies mit einem minimierten Platzbedarf zu realisieren und um eine gute thermische Kopplung mit dem Frischlufteinlasskanal 1 zu erreichen, sind der Gleichstrommotor 13, das Getriebe 14, 15, 16 und die Abtriebswelle 18 des elektrischen Wastegate-Stellers U-förmig um den Frischlufteinlasskanal 1 platziert. Dabei verläuft die Abtriebswelle 18, die in der Figur 3 links vom Frischlufteinlasskanal 1 dargestellt ist, durch fast das gesamte Verdichtergehäuse bis zum Abtriebshebel 9, so dass die Länge l der Abtriebswelle 18 größer ist als der Durchmesser d des Frischlufteinlasskanals 1.

## Patentansprüche

1. Abgasturbolader, der ein einen Frischlufteinlasskanal (1) aufweisendes Verdichtergehäuse (5) und einen in das Verdichtergehäuse (5) integrierten elektrischen Wastegate-Steller (8) enthält, wobei der elektrische Wastegate-Steller (8) mit dem Frischlufteinlasskanal (1) thermisch gekoppelt ist und Bauteile aufweist, die dem Frischlufteinlasskanal (1) benachbart angeordnet sind, **dadurch gekennzeichnet, dass** die Bauteile des elektrischen Wastegate-Stellers (8) den Frischlufteinlasskanal (1) U-förmig umgeben.

2. Abgasturbolader nach Anspruch 1, **dadurch gekennzeichnet, dass** zu den Bauteilen des elektrischen Wastegate-Stellers (8) ein Gleichstrommotor (13), ein Getriebe (14,15,16) und eine Abtriebswelle (18) gehören.

3. Abgasturbolader nach Anspruch 2, **dadurch gekennzeichnet, dass** das Getriebe ein mit dem Gleichstrommotor (13) verbundenes Abtriebszahnrad (14) und ein mit der Abtriebswelle (18) verbundenes und mit dem Abtriebszahnrad (14) gekoppeltes Antriebszahnrad (16) aufweist.

4. Abgasturbolader nach Anspruch 3, **dadurch gekennzeichnet, dass** das Antriebszahnrad (16) der Abtriebswelle (18) mit dem Abtriebszahnrad (14) des Gleichstrommotors (13) über ein Zwischenzahnrad (15) gekoppelt ist.

5. Abgasturbolader nach einem der Ansprüche 2 bis 4, **dadurch gekennzeichnet, dass** die Abtriebswelle (18) in einem Wälzlager (19) gelagert ist.

6. Abgasturbolader nach einem der Ansprüche 2 bis 5, **dadurch gekennzeichnet, dass** die Abtriebswelle (18) auf einen Abtriebshebel (9) einwirkt.

7. Abgasturbolader nach einem der Ansprüche 2 bis 6, **dadurch gekennzeichnet, dass** der Gleichstrommotor (13) und die Abtriebswelle (18) auf einander gegenüberliegenden Seiten des Frischlufteinlasskanals (1) angeordnet sind.

8. Abgasturbolader nach einem der Ansprüche 2 bis 7, **dadurch gekennzeichnet, dass** die Länge (1) der Abtriebswelle (18) größer ist als der Durchmesser (d) des Frischlufteinlasskanals (1).

## Claims

1. Exhaust-gas turbocharger which comprises a compressor housing (5) having a fresh-air inlet duct (1) and comprises an electric wastegate actuator (8) integrated into the compressor housing (5), the electric wastegate actuator (8) being thermally coupled to the fresh-air inlet duct (1) and having components which are arranged adjacent to the fresh-air inlet duct (1), **characterized in that** the components of the electric wastegate actuator (8) surround the fresh-air inlet duct (1) in a U-shaped manner.

2. Exhaust-gas turbocharger according to Claim 1, **characterized in that** the components of the electric wastegate actuator (8) include a direct-current motor (13), a gearing (14, 15, 16) and a drive output shaft (18).

3. Exhaust-gas turbocharger according to Claim 2, **characterized in that** the gearing has a drive output gearwheel (14) which is connected to the direct-current motor (13) and has a drive input gearwheel (16) which is connected to the drive output shaft (18) and coupled to the drive output gearwheel (14).

4. Exhaust-gas turbocharger according to Claim 3, **characterized in that** the drive input gearwheel (16) of the drive output shaft (18) is coupled to the drive output gearwheel (14) of the direct-current motor (13) via an intermediate gearwheel (15).

5. Exhaust-gas turbocharger according to one of Claims 2 to 4, **characterized in that** the drive output shaft (18) is mounted in a rolling bearing (19).

6. Exhaust-gas turbocharger according to one of Claims 2 to 5, **characterized in that** the drive output shaft (18) acts on a drive output lever (9).

7. Exhaust-gas turbocharger according to one of Claims 2 to 6, **characterized in that** the direct-current motor (13) and the drive output shaft (18) are arranged on mutually opposite sides of the fresh-air inlet duct (1).

8. Exhaust-gas turbocharger according to one of Claims 2 to 7, **characterized in that** the length (1) of the drive output shaft (18) is greater than the diameter (d) of the fresh-air inlet duct (1).

## Revendications

1. Turbocompresseur à gaz d'échappement qui comprend un carter de compresseur (5) comprenant un canal d'admission d'air frais (1) et un actionneur électrique Wastegate (8) intégré dans le carter de compresseur (5), l'actionneur électrique Wastegate (8) étant couplé thermiquement au canal d'admission d'air frais (1) et comprenant des composants disposés à proximité du canal d'admission d'air frais (1), **caractérisé en ce que** les composants de l'actionneur électrique Wastegate (8) entoure le canal d'admission d'air frais (1) en formant un U.

2. Turbocompresseur à gaz d'échappement selon la revendication 1, **caractérisé en ce que** les composants de l'actionneur électrique Wastegate (8) comprennent un moteur à courant continu (13), une transmission (14, 15, 16) et un arbre de sortie (18).

3. Turbocompresseur à gaz d'échappement selon la revendication 2, **caractérisé en ce que** la transmission comprend une roue dentée de sortie (14) reliée au moteur à courant continu (13) et une roue dentée d'entraînement (16) reliée à l'arbre de sortie (18) et couplée à la roue dentée de sortie (14).

4. Turbocompresseur à gaz d'échappement selon la revendication 3, **caractérisé en ce que** la roue dentée d'entraînement (16) de l'arbre de sortie (18) est couplée avec la roue dentée de sortie (14) du moteur à courant continu (13) par l'intermédiaire d'une roue dentée intermédiaire (15).

5. Turbocompresseur à gaz d'échappement selon l'une des revendications 2 à 4, **caractérisé en ce que** l'arbre de sortie (18) est logé dans un palier à rouleaux (19).

6. Turbocompresseur à gaz d'échappement selon l'une des revendications 2 à 5, **caractérisé en ce que** l'arbre de sortie (18) agit sur un levier de sortie (9).

7. Turbocompresseur à gaz d'échappement selon l'une des revendications 2 à 6, **caractérisé en ce que** le moteur à courant continu (13) et l'arbre de sortie (18) sont disposés sur des côtés opposés du canal d'admission d'air frais (1).

8. Turbocompresseur à gaz d'échappement selon l'une des revendications 2 à 7, **caractérisé en ce que** la longueur (1) de l'arbre de sortie (18) est supérieure au diamètre (d) du canal d'admission d'air frais (1).
